(19) Europäisches Patentamt
European Patent Office
Office européen des brevets

(11) Publication number: **0 107 316**
**B1**

(12) # EUROPEAN PATENT SPECIFICATION

(45) Date of publication of patent specification: **06.08.86**

(51) Int. Cl.$^4$: **C 09 K 7/02**

(21) Application number: **83305338.2**

(22) Date of filing: **13.09.83**

(54) **Sodium styrene sulfonate-co-sodium-N-(4-sulfophenyl)-maleimide - an improved viscosity control additive.**

(30) Priority: **13.09.82 US 416938**
**13.09.82 US 416939**

(43) Date of publication of application:
**02.05.84 Bulletin 84/18**

(45) Publication of the grant of the patent:
**06.08.86 Bulletin 86/32**

(84) Designated Contracting States:
**BE CH DE FR GB IT LI NL SE**

(56) References cited:
**EP-A-0 079 071**

(73) Proprietor: **Exxon Research and Engineering Company**
**P.O.Box 390 180 Park Avenue**
**Florham Park New Jersey 07932 (US)**

(72) Inventor: **Thaler, Warren Alan**
**133 Deerfield Lane**
**Aberdeen New Jersey 07747 (US)**
Inventor: **Turner, Sam Richard**
**132 Surrey Hill Way**
**Rochester New York 14623 (US)**
Inventor: **Walker, Thad Oscar**
**1311 St. Andrew's**
**Humble Texas 77339 (US)**

(74) Representative: **Field, Roger Norton et al**
**ESSO Engineering (Europe) Ltd. Patents & Licences Apex Tower High Street**
**New Malden Surrey KT3 4DJ (GB)**

**EP 0 107 316 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to water-based drilling muds.

The muds of this invention can typically contain sodium styrene sulphonate-co-sodium-N-(4-sulphophenyl)-maleimide. This is used as an improved viscosity control additive for water-based drilling muds. The resultant muds display good viscosity characteristics and good stability when formulated from ionomers having an appropriate sulphonate level, cations type and cosolvent content. These water-based drilling muds may be used during operation of gas and oil wells.

EP—0079071 describes bore flushing additives which are copolymers of sulphonates of styrene, certain N-vinylamides and optionally acrylamide or methacrylamide.

The water-based drilling muds of the present invention minimally comprise fresh water or salt water, a weighting material and a base to adjust the pH of the water-based drilling mud to between 10.0 and 10.5. Other additives are also included. The specific gravity of the drilling mud is 7 pounds per gallon to 20 pounds per gallon (0.7 to 2 kg/l), more preferably 10 to 16 lb/gallon (1 to 1.6 kg/l) and most preferably 12 to 16 pounds per gallon (1.2 to 1.6 kg/l).

A typical water-based drilling mud, as envisaged by the present invention, comprises water or salt water; weighting material necessary to give a mud density of 7 lb to 23 lb/gallon (0.7 to 2 kg/l); 0.25 to 5 lb/bbl.(0.0007 to 0.014 kg/l) of sodium styrene sulphonate-co-sodium-N-(4-sulphophenyl)-maleimide; and sufficient concentration of base to adjust the pH of the water-based drilling mud to 10.0 to 10.5. Higher levels of the sulphonated polyer can be employed but it is not normally economically attractive. The drilling mud also contains a clay such as Bentonite, at a concentration level of 4 to 30 lb/bbl. (0.011 to 0.084 kg/l), wherein the clay is added to the drilling mud to promote circulation and improve hole stability and cleaning. A lignosulfonate, which is a deflocculation agent, is added to the drilling mud at a concentration level of 1 to 30 lb/bbl. (0.0028 to 0.084 kg/l).

The solid copolymers of the present invention comprise a compolymer of N-(sodiumsulfophenyl)-maleimide and a sulfonate-containing monomer characterized by the formula:

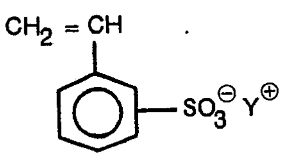

wherein $Y^{\oplus}$ is a cation selected from Groups IA, IIA, IB and IIB of the Periodic Table or an amine of the formula:

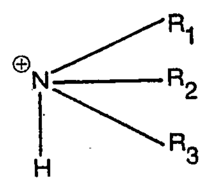

where $R_1$, $R_2$ and $R_3$ are $C_1$ to $C_{12}$ aliphatic groups or hydrogen and the copolymer being water soluble.

The monomers used in the free radical solution copolymerization process are for example N-(4-sodiumsulfophenyl)-maleimide and a sulfonated styrenic comonomer.

The comonomers are dissolved in a water phase in the presence of a suitable free radical initiator, wherein the temperature is sufficient to initiate polymerization. The resultant polymer can be precipitated and filtered and dried under high vacuum.

The copolymers formed from the free radical solution copolymerization of the present invention can be generally described as having an $\overline{M}_n$ of 5,000 to 200,000, more preferably 10,000 to 100,000.

The formed copolymers contain about 50 mol.% of N-(4-sodiumsulfophenyl)-maleimide. The sulfonated styrenic comonomer content is also 50 mol.%.

The sulfonated styrenic monomers of the present invention which are water soluble can be generally described as monomers having unsaturation and a metal or amine sulfonate group. The metal or amine neutralized suflonate monomer is characterized by the formula:

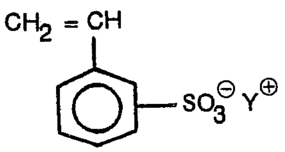

wherein $Y^{\oplus}$ is a cation selected from Groups IA, IIA, IB and IIB of the Periodic Table or an amine of the formula:

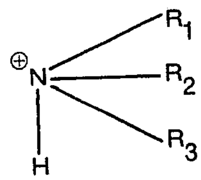

wherein $R_1$, $R_2$ and $R_3$ are $C_1$ to $C_{12}$ aliphatic groups or hydrogen. Particularly suitable metal cations are sodium, potassium and zinc, and an especially preferred metal cation is sodium. A typical example of suitable sulfonate-containing monomers is

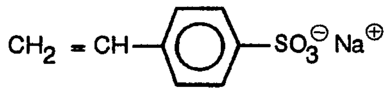 sodium styrene sulfonate

An especially preferred sulfonate-containing monomer is a metal sulfonate styrene. The molar ratio of sulfonate-containing monomer to the N-(4-sodiumsulfophenyl)-maleimide is 50 to 50.

The N-(4-sodiumsulfophenyl)-maleimide monomer used in the free radical solution copolymerization is prepared by a two-step process. In the first step, maleic anhydride is reacted with sulfanilic acid, sodium salt monhydrate in a methanol solution at room temperature to form a half imide according to the reaction scheme:

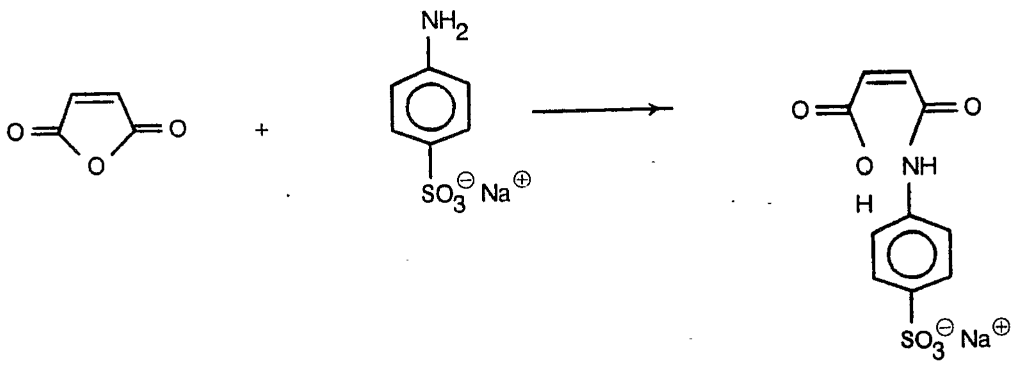

The formed precipitate of the half imide is recovered by filtration and dried under high vacuum.

In the second step, the previously formed half imide is refluxed with sodium acetate and acetic anhydride until a tannish color developed. After cooling, the formed precipitate of the N-(4-sodium-sulfophenyl)-maleimide is formed. The reaction scheme is:

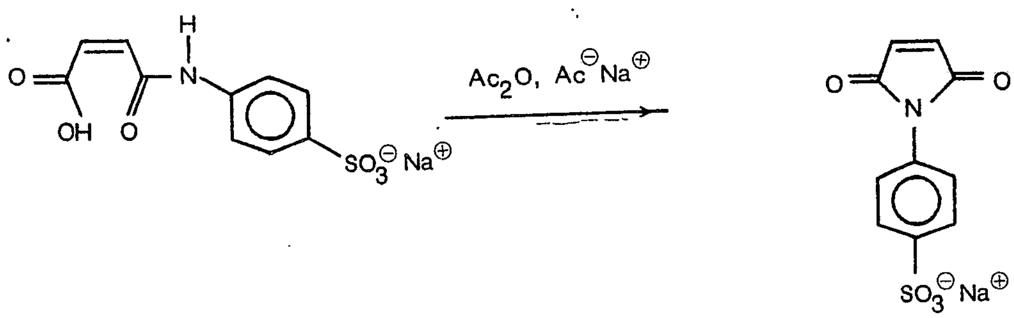


The copolymerization of the sulfonate-containing monomer with the N-(4-sodiumsulfophenyl)-maleimide comprises the steps of dissolving both the sulfonate-containing monomer and the N-(4-phenyl-sulfophenyl)-maleimide in deoxygenated water at 50°C under $N_2$ positive pressure and a water soluble peroxy initiator is added to the solution. The reaction is allowed to proceed from 1 to 48 hours, more preferably 6 to 24 hours. Acetone is added to the reaction solution and the resultant precipitate is filtered and dried under high vacuum.

The water soluble peroxy initiators are selected from potassium persulphate and ammonium persulfate. The concentration of initiator is 5 to 0.1 wt.% based on total reaction solution, more preferably 2 to 0.5 wt.%.

Water soluble redox initiators can also be employed in this free radical solution copolymerization.

Chain transfer agents can be readily employed in the present polymerization process for controlling the molecular weight of the resultant copolymer.

A second route to these copolymers involves the modification of preformed alternating sytrene/maleic anhydride copolymers. This is accomplished sequentially by first sulfonating the styrenic pendant unit with $SO_3$, followed by addition of sulfanilic acid to the enchained succinic anhydride units. The preformed polymer can range in molecular weight from 1000 to 500,000.

Example 1

Preparation of Half Imide

To a solution of 54.0 g. sulfanilic acid, sodium salt monohydrate (234 mmoles) in 1000 ml. abs. MeOH was added a solution of 35.0 g. maleic anhydride (357 mmoles, 1.53 equivalents) in 250 ml. abs. MeOH. After stirring at room temperature for less than five minutes, a yellow precipitate formed. The reaction was allowed to continue for a total of 20 minutes, then the precipitate was filtered off and dried under high vacuum giving 67.89 g. II (99.1% yield).

IR (Nujol): 3280 $cm^{-1}$ (broad), 1715 $cm^{-1}$, 1630 $cm^{-1}$, 1560—1480 $cm^{-1}$ (broad), 1320 $cm^{-1}$ (weak), 1300 $cm^{-1}$, 1200 $cm^{-1}$, 1120 $cm^{-1}$, 1040—1000 $cm^{-1}$ (3 peaks), 970 $cm^{-1}$, 900 $cm^{-1}$, 850 $cm^{-1}$, 710 $cm^{-1}$, 640 $cm^{-1}$, 620 $cm^{-1}$.

Analytical analysis: Calculated C, 40.96; H, 2.73; N, 4.78; S, 10.92. Found C, 37.38; H, 353; N, 4.36; S, 10.02.

Example 2

Preparation of Sodium-N-(4-sulfophenyl)-Maleimide

A slurry of 0.8 g. sodium acetate (9.8 mmoles) and 16.0 g. II (54.6 mmoles) in 200 ml. acetic anhydride was refluxed until a color change to a tannish solution was noted. The solution was cooled to room temperature and diluted with 200 ml. EtOH:Acetone 3:2. The solution was filtered and the precipitate was slurried in an additional 200 ml. EtOH:Acetone 3:2 then filtered. The precipitate was dried under high vacuum giving 10.23 g. III (68.1%).

IR (Nujol): 1770 $cm^{-1}$ (weak), 1700 $cm^{-1}$, 1600 $cm^{-1}$, 1500 $cm^{-1}$, 1400 $cm^{-1}$, 1210 $cm^{-1}$, 1180 $cm^{-1}$, 1130 $cm^{-1}$, 1040 $cm^{-1}$, 1010 $cm^{-1}$, 950 $cm^{-1}$, 820 $cm^{-1}$, 755 $cm^{-1}$, 720 $cm^{-1}$, 690 $cm^{-1}$, 670 $cm^{-1}$, 625 $cm^{-1}$ (weak).

Analysis: Calcd. C, 43.64; H, 2.18; N, 5.09; S, 11.64. Found C, 42.61; H, 2.87; N, 5.92; S, 11.75.

NMR ($D_2O$): 6.35, singlet, 2H; 7.3—8.0, multiplet, 4H.

Example 3

Preparation of Sodium Styrene Sulfonate-Co-Sodium-N-(4-sulfo-phenyl)-Maleimide by Copolymerization

To a stirred solution of 10.0 g. N-(4-sodiumsulfophenyl)-maleimide (36.4 mmole) and 7.49 g. sodium-styrenesulfonate (36.4 mmole) in 100 ml. deoxygenated $H_2O$ at 50°C under $N_2$ positive pressure was added 0.01 g. potassium peroxydisulphate (0.1 wt.%). The mixture was allowed to react for 24 hours then the product was precipitated by addition of the solution to 2000 ml. acetone. The pinkish, fibrous precipitate (VII) was filtered and dried under high vacuum giving 14.28 g. (81.6% yield).

IR (film from $H_2O$): 3100 $cm^{-1}$ (weak), 3060 $cm^{-1}$ (weak), 2190 $cm^{-1}$ (weak), 1770 $cm^{-1}$, 1700 $cm^{-1}$, 1600 $cm^{-1}$, 1200 $cm^{-1}$, 1120 $cm^{-1}$, 1035 $cm^{-1}$, 830 $cm^{-1}$, 710 $cm^{-1}$.

Analysis Calcd. N, 2.92; S, 13.36; Found N, 3.05; S, 13.57.

Example 4

Preparation of Sodium Styrene Sulfonate-Co-sodium-N-(4-Sulfophenyl)-Maleimide by Polymer Modification

Alternating 1:1 styrene maleic anhydride copolymer, 202 g. was combined with 2000 ml. dichloroethane and 18.2 g. triethylphosphate; 88 g. of sulfur trioxide was added slowly over about 15 minutes. The mixture was stirred at ambient for several hours and collected by filtration. The solid was washed with several portions of ether and dried in vacuo. Titration indicated that about two-thirds of the available styrene units were sulfonated.

Sulfanilic acid, 17.3 g., was dissolved in 200 ml. of water combined with 13.3 g. of 50% sodium hydroxide solution. The sulfonated copolymer, 25.5 g., was added and stirred until dissolved. The solution was placed in pressure reactor which was heated by a 190°C oil bath for 16 hours. The solution was spraydried using 125°C external temperature, and a 75°C outlet temperature. The product was a fine powder weighing 35 g.

Example 5

Test Mud Formulation

The following is a typical formulation for a fresh water lignosulfonate mud. The density of this system can be adjusted as desired by the addition of Barite ($BaSO_4$).

| | |
|---|---|
| Fresh water | 350 cc |
| Bentonite | 22 lb/bbl. (0.063 kg/l) |

| | |
|---|---|
| Lignosulfonate | 5 lb/bbl. (0.014 kg/l) |
| pH | 10-1-.5 w. NaOH |

The Bentonite is added slowly to the fresh water so as to obtain maximum yield or viscosity. This slurry is then aged overnight at 150°F (65.6°C). To the cooled mud is added the lignosulfonate and the pH is adjusted to 10 to 10.5 with caustic. Barite is added for the desired weight (14.5 lb/gal) (1.45 kg/l). The mud is aged again overnight at 150°F (65.6°C) to ensure chemical equilibrium. The pH of the cooled mud is readjusted to 10 to 10.5 with caustic. To aliquots of this base mud were added the dispersant stabilizers. These samples were bombed at 400°F (204°C) for 16 hours and then the rheological properties were measured.

The results of testing (I) in comparison to the commercial Mil-Temp deflocculation polymer are shown in Table I. Significant improvements in the deflocculation efficacy of (I) versus Mil-Temp were observed. At the one pound per barrel (0.003 kg/l) additive level, the 0 and 10 min. gel strengths are reduced by a factor of 5.5 to 7 and the 600 and 300 rpm viscosities also significantly reduced.

TABLE I

Comparison of Stabilizing Ability of Copolymer (Example I) and Mil-Temp

| Material | Conc. lb/bbl. (Kg/l) | 600[a] | 300[b] | PV[c] | Gels[e]<br>YP[d] | 0 | 10 | pH | Temperature |
|---|---|---|---|---|---|---|---|---|---|
| Base | | >300 | 294 | | | 230 | 273 | 10.4 | 400°F (204°C) |
| + Copolymer (Example I) | ½ (0.001) | >300 | 195 | | | 5 | 7 | 10.4 | 400°F (204°C) |
| + Copolymer (Example I) | 1 (0.003) | 245 | 150 | 95 | 55 | 4 | 4 | 10.4 | 400°F (204°C) |
| + Copolymer (Example I) | 2 (0.006) | 252 | 167 | 85 | 82 | 4 | 5 | 10.4 | 400°F (204°C) |
| + Mil-Temp | 1 (0.003) | >300 | >300 | | | 22 | 29 | 10.7 | 400°F (204°C) |
| + Mil-Temp | 2 (0.006) | >300 | 280 | | | 10 | 12 | 10.8 | 400°F (204°C) |

(a) = 600 rpm Fann Viscosity
(b) = 300 rpm Fann Viscosity
(c) = plastic viscosity
(d) = yield point
(e) = 0 and 10 min. gel strengths

**Claims**

1. A water-based drilling mud which comprises:
(a) water;
(b) about 4 to about 30 lbs/bbl. (0.011 to 0.084 kg/l) of drilling mud of a clay;
(c) about 1 to about 30 lbs/bbl. (0.0028 to 0.084 kg/l) of drilling mud of a ligno-sulphonate;
(d) 7 lb/gallon to 20 lb/gallon (0.7 to 2 kg/l) of drilling mud of weighting material;
(e) about 0.25 to about 5 lbs/bbl. (0.0007 to 0.014 kg/l) of drilling mud of a water-soluble copolymer of N-(sodiumsulphophenyl)-maleimide and a sulphonate-containing monomer having the formula:

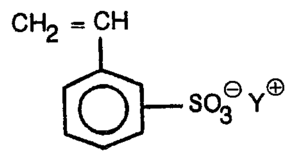

wherein $Y^{\oplus}$ is a cation selected from Groups IA, IIA, IB and IIB of a Periodic Table or an amine of the formula:

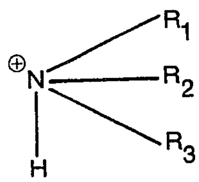

where $R_1$, $R_2$ and $R_3$ are $C_1$ to $C_{12}$ aliphatic groups of hydrogen; and
(f) a base of sufficient quantity to adjust the pH of the water-based drilling mud to about 10 to about 10.5.

2. A water-based drilling mud according to claim 1 wherein the copolymer (e) is sodium styrene sulphonate co-sodium-N-(4-sulphophenyl)-malemide copolymer prepared by the copolymerisation of sodium styrene sulphonate and sodium-N-(4-sulphophenyl)-maleimide.

3. A water-based drilling mud according to claim 1 wherein the copolymer (e) is sodium styrene sulphonate-co-sodium-N-(4-sulphophenyl)-malemide copolymer prepared by modification of préformed styrene-maleic anhydride copolymer.

4. A water-based drilling mud according to any one of the preceding claims wherein said clay (b) is Bentonite.

5. A water-based drilling mud according to any one of the preceding claims wherein said base (f) is sodium hydroxide.

**Patentansprüche**

1. Bohrschlamm auf Wasserbasis, gekennzeichnet durch:
(a) Wasser;
(b) etwa 0,011 bis etwa 0,084 kg Ton je Liter Bohrschlamm;
(c) etwa 0,0028 bis etwa 0,084 kg eines Lignosulfonats je Liter Bohrschlamm;
(d) 0,7 bis 2 kg Beschwerungsmittel je Liter Bohrschlamm;
(e) je Liter Bohrschlamm etwa 0,0007 bis etwa 0,014 kg eines wasserlösclichen Copolymeren von N-(Natriumsulfophenyl)-maleinimid und einem sulfonathaltigen Monomer mit der Formel:

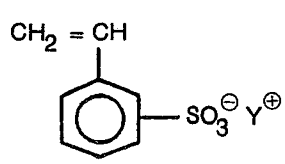

in der $Y^{\oplus}$ ein Kation ausgewählt aus den Gruppen IA, IIA, IB, und IIB des Periodischen Systems der Elemente oder ein Amin mit der Formel:

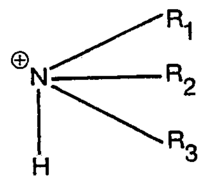

ist, wobei $R_1$, $R_2$ und $R_3$ aliphatische $C_1$—$C_{12}$— Gruppen oder Wasserstoff sind; und

(f) eine Base in ausreichender Menge, um den pH-Wert des Bohrschlamms auf Wasserbasis auf etwa 10 bis etwa 10,5 einzustellen.

2. Bohrschlamm auf Wasserbasis nach Anspruch 1, dadurch gekennzeichnet, daß das Copolymer (e) Natriumstyrolsulfonat-co-natrium-N-(4-sulfophenyl)-maleinimid-Copolymer ist, das durch Copolymerisation von Natriumstyrolsulfonat und Natrium-N-(4-sulfophenyl)-maleinimid hergestellt ist.

3. Bohrschlamm auf Wasserbasis nach Anspruch 1, dadurch gekennzeichnet, daß das Copolymer (e) Natriumstyrolsulfonat-co-natrium-N-(4-sulfophenyl)-maleinimid-Copolymer ist, das durch Modifikation von vorgefertigtem Styrol-Maleinsäureanhyrid-Copolymer hergestellt ist.

4. Bohrschlamm auf Wasserbasis nach einem der vorangehenden Ansprüche, dadurch gekennzeichnet, daß Ton (b) Bentonit ist.

5. Bohrschlamm auf Wasserbasis nach einem der vorangehenden Ansprüche, dadurch gekennzeichnet, daß Base (f) Natriumhydroxid ist.

**Revendications**

1. Boue de forage à base d'eau qui comprend:

(a) de l'eau;

(b) environ 4 à environ 30 livres/barrils (0,011 à 0,084 kg/l) de boue de forage d'une argile;

(c) environ 1 à environ 30 livres/barrils (0,0028 à 0,084 kg/l) de boue de forage d'un ligno-sulfonate;

(d) 7 livres/gallon à 20 livres/gallon (0,7 à 2 kg/l) de boue de forage d'un alourdissant;

(e) environ 0,25 à environ 5 livres/barril (0,0007 à 0,014 kg/l) de boue de forage d'un copolymère soluble dans l'eau de N-(sodiumsulfophényl)-maléimide et d'un monomère contenant un groupe sulfonate ayant la formule:

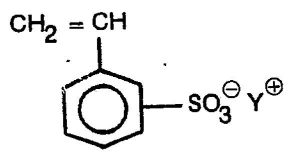

dans laquelle $Y^{\oplus}$ est un cation choisi dans les groupes IA, IIA, IB et IIB de la classification périodique des éléments ou une amine de formule:

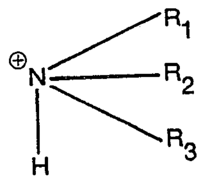

dans laquelle $R_1$, $R_2$ et $R_3$ son des groupes aliphatiques en $C_1$ à $C_{12}$ ou un atome d'hydrogène; et

(f) une base en quantité suffisante pour ajuster le pH de la boue de forage à base d'eau à une valeur d'environ 10 à environ 10,5.

2. Boue de forage à base d'eau selon la revendication 1, dans laquelle le coplymère (e) est un copolymère de styrènesulfonate de sodium-co-sodium-N-(4-sulfophényl)-maléimide préparé par la copolymérisation de styrène sulfonate de sodium et de sodium-N-(4-sulfophényl)-maléimide.

3. Boue de forage à base d'eau selon la revendication 1, dans laquelle le copolymère (e) est un copolymère styrène-sulfonate de sodium-co-sodium-N-(4-sulfophényl)-maléimide préparé par modification d'un copolymére styrène-anhydride maléique préformé.

4. Boue de forage selon l'une quelconque des revendications précédente dans laquelle l'argile (b) est de la bentonite.

5. Boue de forage selon l'une quelconques des revendications précédentes, dans laquelle la base (f) est l'hydroxyde de sodium.